# EUROPEAN PATENT APPLICATION

(11) **EP 3 354 137 A1**
(43) Date of publication of application: **01.08.2018**
(21) Application number: 16848106.7
(22) Date of filing: 21.09.2016
(51) Int. Cl.: A23B 4/09, A23B 7/055, A23B 4/015, A23B 7/015

(54) **ANIMAL, PLANT, FRUIT AND VEGETABLE FREEZING PRETREATMENT METHOD**

(30) Priority: 22.09.2015 CN 201510607449
(71) Applicant: Huang, Xiang, Fuzhou, Fujian 350000 (CN)
(72) Inventor: HUANG, Yushi, Fuzhou Fujian 350000 (CN)
(74) Representative: Cabinet Chaillot
(86) International application number: PCT/CN2016/099542
(87) International publication number: WO 2017/050225

(57) **Abstract**

Disclosed is an animal, plant, fruit and vegetable freezing pretreatment method, comprising the following steps: step one, preparing a freezing pretreatment solution being prepared from 0.01 to 10 percent of freezing pretreatment assistant in mass and the balance of water; and step two, magnetic field pretreatment: after removing impurities from food in need of refrigeration and fresh keeping and washing the food, soaking the food in the pre-prepared freezing pretreatment solution in 0 to 10°C, and putting the food in a low-equivalent alternating electromagnetic environment, wherein the time is 5 to 60 minutes, and the low-equivalent alternating electromagnetic environment is 10 to 5000 µT in field intensity and 15 to 30000 Hz in frequency. The freezing pretreatment assistant in the animal, plant, fruit and vegetable freezing pretreatment method is prepared from 0.02 to 6 percent of sorbitol, 0.02 to 4 percent of trehalose, and 0.02 to 4 percent of amino acid. The advantages of repeated use, shorter pretreatment time, and better quality of frozen products are obtained.

## Description

### Technical Field

The present invention relates to a freezing pretreatment method, and more specifically relates to a kind of animal, plant, fruit and vegetable freezing pretreatment method.

### Background Art

In recent years, researches found that the use of phosphates, sugar alcohols, sugars, amino acids or compound products made of these elements as antifreeze agents which are applied to pretreatment of frozen food will result in noticeable improvement of the quality of frozen food.

In the periodical "Science and Technology of Food Industry" of year 2009 issue No. 3, an invention by Cui et al. was published, wherein freezing pretreatment of large yellow croakers (*Larimichthys crocea*) before freezing by soaking them in polyphosphates, sorbitol and trehalose of different concentrations for 30 mins is disclosed. By means of orthogonal experiment, the invention concluded that the best antifreeze agent for farmed large yellow croakers comprises: 2% polyphosphates, 1% trehalose, and 2% sorbitol. After the antifreeze agent is applied, a pH value, an amount of salt-soluble protein and ATPase activity in the farmed large yellow croakers increase 1.60%, 33.98% and 42.52% respectively compared with the farmed yellow croakers before application of the antifreeze agent. The experiment conducted in this invention has great reference value for practical production.

In the periodical "Food and Machinery" Volume 27 issue no. 5 of Sept/2011, an article titled "influence of freezing method to the quality characteristics of white prawn (*Litopenaeus vannamei*)" by Yang et al. was published. The article disclosed a pretreatment formula and a method of pretreatment based on a water retaining agent made of a compound of sodium polyphosphate and trehalose, and it is concluded that the best soaking solution is a compound solution of trehalose and tripolyphosphate resulting in a minimum water loss rate (1.78%) of the white prawn.

Some Japanese researchers found that magnetic field plays a certain role during freezing. For example, a magnetic resonance freezing method was disclosed by JP2000325062A and CN102686118A: by cooling an object in the magnetic field and creating a supercooled state with good reproducibility, and by completing a subsequent process from the beginning of condensation to completed condensation within a very short time, cell damages of the object during freezing can be inhibited.

Said JP2000325062A and CN102686118A suggested that the entire freezing process can improve the quality of frozen food if the process is carried out within a noticeable magnetic field. However, it is disappointing to discover a serious limitation of the teachings disclosed by these two patent applications: a person skilled in this art discovered that improvement of the quality of frozen food relies heavily on the availability of the magnetic field. The claimed effect can only be achieved if the entire freezing process is done within the magnetic field. If the magnetic field is applied only to the pretreatment stage, the magnetic field has almost no contribution to the improvement of frozen food quality.

An existing freezer has to be thoroughly modified, and large magnetic field generation devices have to be installed in order to apply the technique disclosed by said JP2000325062A and CN102686118A. Thorough modification of a freezer and installation of large magnetic field generation devices are expensive. Therefore, it is very difficult to promote and use the technical solution proposed by said JP2000325062A and CN102686118A in the market.

JP2004141057A disclosed a freezing method of raw wakame and sea urchin by using electromagnetostatic field. However, this freezing method has the following disadvantages:
1. Marine products are treated under electromagnetostatic field after being soaked, wherein a magnetic flux density is 1-20T, preferably 5-10T. If the magnetic flux density is below 1T, it may not be possible to preserve the quality of the marine products. Therefore, the given technical solution requires high magnetic flux density and corresponding devices that can produce such a strong magnetic field. However, these devices have high power consumption, and the strong electromagnetostatic field as generated has significant impact on the body health of the workers operating the devices. Besides, these devices are dangerous and cannot be approached if the body carries a pacemaker or any metal parts.
2. The treatment time of the given technical solution is 1-10 hours, preferably 2-5 hours. If the treatment time is below 1 hour, it may not be possible to preserve the quality of the marine products. An exceptionally long treatment time according to the given technical solution affects the freshness of the products and production efficiency.

### Disclosure of the Invention

An object of the present invention is to provide a freezing pretreatment method for animals and plants. Compared with existing freezing pretreatment methods, pretreatment solution of the present invention can be reused, pretreatment time is shorter, and the frozen products have better quality.

Another object of the present invention is to provide a freezing pretreatment method particularly for fruits and vegetables, applicable to the field of vegetable and fruit industries. The pretreatment solution of this method can be reused, pretreatment time is shorter, and the frozen products have better quality.

The first object of the present invention is attained through the technical solution detailed below:
A freezing pretreatment method for animals and plants, comprising the following steps:
Step 1: Preparing a freezing pretreatment solution, which comprises a freezing pretreatment auxiliary agent and water, wherein the freezing pretreatment auxiliary agent comprises 0.01-10 mass percentage of the freezing pretreatment solution and the water comprises a remaining mass percentage of the freezing pretreatment solution.
Step 2: Pretreating within a magnetic field, which comprises removing impurities and cleaning food items to be frozen and kept fresh, soaking the food items in the freezing pretreatment solution of 0-10°C as prepared, placing the food items soaked in the freezing pretreatment solution in a low yield alternating electromagnetic environment for 5-60mins;
Said low yield alternating electromagnetic environment has a field magnitude of 10-5000µT and a frequency of 15-30000Hz.

Preferred technical proposals are given below in order to better carry out the present invention:
Preferably, the field magnitude of said low yield alternating electromagnetic environment is 20-2000µT.

Preferably, the frequency of said low yield alternating electromagnetic environment is 20-1600Hz.

Preferably, the freezing pretreatment auxiliary agent comprises any one of 0.01-5 mass percentage of phosphates, 0.01-10 mass percentage of sugar alcohols, 0.01-10 mass percentage of sugars, and 0.01-5 mass percentage of amino acids or any combination thereof.

Another object of the present invention is achieved by the following technical solution:
A freezing pretreatment method for fruits and vegetables, comprising the following steps:
Step 1: Preparing a freezing pretreatment solution, which comprises a freezing pretreatment auxiliary agent and water, wherein the freezing pretreatment auxiliary agent comprises 0.01-10 mass percentage of the freezing pretreatment solution and the water comprises a remaining mass percentage of the freezing pretreatment solution.
Step 2: Pretreating within a magnetic field, which comprises removing impurities and cleaning food items to be frozen and kept fresh, soaking the food items in the freezing pretreatment solution of 0-10°C as prepared, placing the food items soaked in the freezing pretreatment solution in a low yield alternating electromagnetic environment for 5-60mins;
said low yield alternating electromagnetic environment has a field magnitude of 10-5000µT and a frequency of 15-30000Hz;
the freezing pretreatment auxiliary agent comprises 0.02- 6 mass percentage of sorbitol, 0.02- 4 mass percentage of trehalose and 0.02- 4% of amino acids.

Preferred technical proposals are given below in order to better carry out the present invention:
Preferably, the field magnitude of said low yield alternating electromagnetic environment is 20-2000µT.

Preferably, the frequency of said low yield alternating electromagnetic environment is 20-1600Hz.

Compared with the prior art, the present invention has the following beneficial effects:
1. The pretreatment solution according to the present invention can be reused for 8-10 times. The time for pretreatment for the same object is significantly shortened. The quality of the frozen products is better.
2. The present invention can be implemented without modifying existing freezers. Processing is flexible wherein small size electromagnetic field generating devices can be used for freezing the food items batch by batch.

### Best Mode for Carrying out the Invention

The present invention is described in detail below:

### 1. Selection and use of freezing pretreatment auxiliary agent

It should be noted that a ratio between the freezing pretreatment auxiliary agent and water should be suitably adjusted based on specific properties of different products such as size and dense/loose tissue structure.
(1) General choice: in general, various existing antifreeze agent can be used as the freezing pretreatment auxiliary agent.
(2) Preferred choice: any one or any combination of the following four antifreeze agents to be used as the freezing pretreatment auxiliary agent can achieve a better effect:
   1) Phosphates (single or compound phosphates); concentration level 0.1-3 mass percentage.
   2) Sugar alcohols (single or compound sugar alcohols); concentration level 0.1-10 mass percentage.
   3) Sugars (single or compound sugars); concentration level 0.1-10 mass percentage.
   4) Amino acids (antifreeze proteins, collagen peptides, amino acids or compound amino groups); concentration level 0.1- 5 mass percentage.

These four antifreeze agents have a higher degree of harmony with the magnetic field. These four antifreeze agents when used with together with the magnetic field can significantly improve freezing quality.
(3) Most preferred choice: A freezing pretreatment auxiliary agent being a compound of 0.02- 6 mass percentage of sorbitol, 0.02- 4 mass percentage of trehalose and 0.02- 4 mass percentage of amino acid has the best synergistic effect with the magnetic field.

Use of the freezing pretreatment auxiliary agent according to this formula does not only attain the beneficial effects described in the present description, but also attain the following unexpected effect: food products having extremely poor tissue elasticity such as fruits and vegetables are found to have improved quality after freezing pretreatment.

Existing freezing pretreatment method has very little effect on food products like fruits and vegetables. At present, a noticeable effect can only be attained by freezing method that uses electromagnetic interference throughout the entire freezing process. However, the freezing method that uses electromagnetic interference throughout the entire freezing process constitutes an unaffordable high cost for these kinds of food products because fruits and vegetables are not sold at a high price. Therefore, storage of fruits and vegetables by freezing is an unsolved issue already existing for ages in this field of art, and the present invention is a breakthrough of this unsolved issue.

### 2. Parameter setting in low yield alternating electromagnetic environment.

When pretreating products to be frozen in an alternating electromagnetic environment, a magnitude and frequency of the alternating electromagnetic field should be set according to specific properties of different products such as size and dense/loose tissue structure.

For marine products generally having a small to medium size, the magnitude of the magnetic field is set as 10-5000µT, and the frequency is set as 15-30000Hz. More preferably, the magnitude of the magnetic field is set as 20-2000µT, and the frequency is set as 20-1600Hz.

### 3. Embodiments

### Embodiment 1

Freezing pretreatment auxiliary agent: A kind of phosphates, specifically a compound phosphate prepared by sodium tripolyphosphate, hexametaphosphate, and sodium pyrophosphate in a ratio of 1:1:1. Use the compound phosphate in an amount of 0.1% of a total weight of resulting surimi (ground meat), add in a little amount of water to dissolve the freezing pretreatment auxiliary agent to obtain a freezing pretreatment solution, mix the freezing pretreatment solution with the surimi to obtain a mixture, stir and blend the mixture.

### Object: Fresh sea eel surimi

Process: After the mixture of the freezing pretreatment solution and the surimi is stirred and blended, place the mixture in an alternating electromagnetic environment having a magnetic field magnitude of 10-100µT and a frequency of 15-150Hz, rest the mixture for 10 mins and then store the mixture in a freezer for freezing. A comparison between the experiment results according to embodiment 1 and parameters measured in several control groups are set out in table 1:

**Table 1: Influence to the properties of the surimi according to embodiment 1 and several control groups after the surimi is frozen for 7 days and 14 days**

| | 7 days | | 14 days | |
|---|---|---|---|---|
| | salt-soluble protein | viscosity of surimi | salt-soluble protein | viscosity of surimi |
| | mg·g-1 (meat) | g/cm^2 | mg·g-1 (meat) | g/cm^2 |
| No magnetic field | 35.3 | 9368.2 | 29.0 | 7235.9 |
| No auxiliary agent | | | | |
| Has magnetic field | 35.8 | 9375.3 | 29.4 | 7247.2 |
| No auxiliary agent | | | | |
| Has auxiliary agent | 37.4 | 9764.2 | 31.2 | 8122.7 |
| No magnetic field | | | | |
| Has magnetic field | 38.6 | 10145.1 | 32.6 | 8815.9 |
| Has auxiliary agent | | | | |

### Embodiment 2:

Freezing pretreatment auxiliary agent: Sorbitol, which is a kind of sugar alcohols. Use the sorbitol in an amount of 4% of a total weight of resulting surimi (ground meat), add in a little amount of water to dissolve the freezing pretreatment auxiliary agent to obtain a freezing pretreatment solution, mix the freezing pretreatment solution with the surimi to obtain a mixture, stir and blend the mixture.

### Object: Fresh sea eel surimi

Process: After the mixture of the freezing pretreatment solution and the surimi is stirred and blended, place the mixture in an alternating electromagnetic environment having a magnetic field magnitude of 20-200µT and a frequency of 20-200Hz, rest the mixture for 10 mins and then store the mixture in a freezer for freezing. A comparison between the experiment results according to embodiment 2 and parameters measured in several control groups are set out in table 2:

**Table 2: Influence to the properties of the surimi according to embodiment 2 and several control groups after the surimi is frozen for 7 days and 14 days**

| | 7 days | | 14 days | |
|---|---|---|---|---|
| | salt-soluble protein | viscosity of surimi | salt-soluble protein | viscosity of surimi |
| | mg·g-1 (meat) | g/cm^2 | mg·g-1 (meat) | g/cm^2 |
| No magnetic field | 35.3 | 9368.2 | 29.0 | 7235.9 |
| No auxiliary agent | | | | |
| Has magnetic field | 35.8 | 9375.3 | 29.4 | 7247.2 |
| No auxiliary agent | | | | |
| Has auxiliary agent | 42.3 | 11163.8 | 35.9 | 9587.4 |
| No magnetic field | | | | |
| Has magnetic field | 42.9 | 11527.94 | 36.8 | 10657.7 |
| Has auxiliary agent | | | | |

### Embodiment 3:

Freezing pretreatment auxiliary agent: White sugar, which is a kind of sugars. Use the white sugar in an amount of 4% of a total weight of resulting surimi (ground meat), add in a little amount of water to dissolve the freezing pretreatment auxiliary agent to obtain a freezing pretreatment solution, mix the freezing pretreatment solution with the surimi to obtain a mixture, stir and blend the mixture.

### Object: Fresh sea eel surimi

Process: After the mixture of the freezing pretreatment solution and the surimi is stirred and blended, place the mixture in an alternating electromagnetic environment having a magnetic field magnitude of 2000-3000µT and a frequency of 1600-2400Hz, rest the mixture for 10 mins and then store the mixture in a freezer for freezing. A comparison between the experiment results according to embodiment 3 and parameters measured in several control groups are set out in table 3:

**Table 3: Influence to the properties of the surimi according to embodiment 3 and several control groups after the surimi is frozen for 7 days and 14 days**

| | 7 days | | 14 days | |
|---|---|---|---|---|
| | salt-soluble protein | viscosity of surimi | salt-soluble protein | viscosity of surimi |
| | mg·g-1 ( meat) | g/cm^2 | mg·g-1 ( meat) | g/cm^2 |
| No magnetic field | 35.3 | 9368.2 | 29.0 | 7235.9 |
| No auxiliary agent | | | | |
| Has magnetic field | 35.8 | 9375.3 | 29.4 | 7247.2 |
| No auxiliary agent | | | | |
| Has auxiliary agent | 42.7 | 12129.7 | 36.6 | 10859.7 |
| No magnetic field | | | | |
| Has magnetic field | 43.3 | 12481.3 | 37.4 | 11208.2 |
| Has auxiliary agent | | | | |

### Embodiment 4:

Freezing pretreatment auxiliary agent: Collagen peptide, which is a kind of amino acids. Use the collagen peptide in an amount of 0.1% of a total weight of resulting surimi (ground meat), add in a little amount of water to dissolve the freezing pretreatment auxiliary agent to obtain a freezing pretreatment solution, mix the freezing pretreatment solution with the surimi to obtain a mixture, stir and blend the mixture.

### Object: Fresh sea eel surimi

Process: After the mixture of the freezing pretreatment solution and the surimi is stirred and blended, place the mixture in an alternating electromagnetic environment having a magnetic field magnitude of 3000-5000µT and a frequency of 25000-30000Hz, rest the mixture for 10 mins and then store the mixture in a freezer for freezing. A comparison between the experiment results according to embodiment 4 and parameters measured in several control groups are set out in table 4:

**Table 4: Influence to the properties of the surimi according to embodiment 4 and several control groups after the surimi is frozen for 7 days and 14 days**

| | 7 days | | 14 days | |
|---|---|---|---|---|
| | salt-soluble protein | viscosity of surimi | salt-soluble protein | viscosity of surimi |
| | mg·g-1 ( meat) | g/cm^2 | mg·g-1 ( meat) | g/cm^2 |
| No magnetic field | 35.3 | 9368.2 | 29.0 | 7235.9 |
| No auxiliary agent | | | | |
| Has magnetic field | 35.8 | 9375.3 | 29.4 | 7247.2 |
| No auxiliary agent | | | | |
| Has auxiliary agent | 37.8 | 9880.7 | 32.3 | 8701.3 |
| No magnetic field | | | | |
| Has magnetic field | 38.7 | 10378.4 | 34.1 | 9012.2 |
| Has auxiliary agent | | | | |

### Embodiment 5-1:

Freezing pretreatment auxiliary agent: A compound of sodium polyphosphate and trehalose in a ratio of 1:1. Use the compound in an amount of 2.5% of a total weight of resulting surimi (ground meat), add in a little amount of water to dissolve the freezing pretreatment auxiliary agent to obtain a freezing pretreatment solution, mix the freezing pretreatment solution with the surimi to obtain a mixture, stir and blend the mixture.

### Object: Fresh sea eel surimi

Process: After the mixture of the freezing pretreatment solution and the surimi is stirred and blended, place the mixture in an alternating electromagnetic environment having a magnetic field magnitude of 100-200µT and a frequency of 100-200Hz, rest the mixture for 10 mins and then store the mixture in a freezer for freezing. A comparison between the experiment results according to embodiment 5-1 and parameters measured in several control groups are set out in table 5-1:

**Table 5-1: Influence to the properties of the surimi according to embodiment 5-1 and several control groups after the surimi is frozen for 7 days and 14 days**

| | 7 days | | 14 days | |
|---|---|---|---|---|
| | salt-soluble protein | viscosity of surimi | salt-soluble protein | viscosity of surimi |
| | mg·g-1 ( meat) | g/cm^2 | mg·g-1 ( meat) | g/cm^2 |
| No magnetic field | 35.3 | 9368.2 | 29.0 | 7235.9 |
| No auxiliary agent | | | | |
| Has magnetic field | 35.8 | 9375.3 | 29.4 | 7247.2 |
| No auxiliary agent | | | | |
| Has auxiliary agent | 43.9 | 11953.2 | 38.2 | 9897.9 |
| No magnetic field | | | | |
| Has magnetic field | 44.8 | 12319.3 | 39.5 | 11023.8 |
| Has auxiliary agent | | | | |

### Embodiment 5-2:

The present embodiment is a comparative experiment with reference to the freezing pretreatment technique disclosed by Yang et al. In the present embodiment, the choice of ingredients of the freezing pretreatment auxiliary agent and the object to be frozen are the same as those taught by Yang et al.

Freezing pretreatment auxiliary agent: A compound of sodium tripolyphosphate and trehalose in a ratio of 1:1. Dissolve the compound in water to obtain a freezing pretreatment solution having a concentration level of 2.5%, wherein an amount of water as used is just sufficient to cover the white prawns (*Litopenaeus vannamei*) to be subject to freezing pretreatment in a container (i.e. a volume of the freezing pretreatment solution comprises 1.25% sodium tripolyphosphate, 1.25% trehalose and the remaining volume being water).

### Object: White prawns (Litopenaeus vannamei)

Process: after the white prawns are soaked in the freezing pretreatment solution, place the white prawns soaked in the freezing pretreatment solution at rest in an alternating electromagnetic environment having a magnetic field magnitude of 500-800µT and a frequency of 500-800Hz for pretreatment under temperature 4°C. A pretreatment time for each batch of white prawns is 30 mins. After that, use a plate type quick freezing machine to quickly freeze the white prawns to have a center temperature of -18°C. The white prawns are then frozen for 3 months.

The corresponding freezing pretreatment according to Yang et al. comprises: the use of pretreatment formula 2 and method 2, that is to say, the white prawns are soaked in water retaining agent (using a compound solution having sodium polyphosphate and trehalose making up 3% of the volume of the compound solution in a ratio of 1:1 to soak the white prawns for 2 hours under 4 °C) → the white prawns are quickly frozen having a center temperature of -18 °C(-75°C supercool quick freezing) → freeze and store the white prawns in a -18 °C freezer for 3 months.

### Comparative experiment results:

1) The freezing pretreatment auxiliary agent used in the freezing pretreatment method according to the present embodiment has a concentration level of 2.5%, which is reduced from 3% of the water retaining agent which is a compound solution used in the freezing pretreatment of Yang et al, meaning that the amount used is reduced by more than 23% for a single time use.
2) Compared with Yang et al. in which the water retaining agent can be used for one time only, the freezing pretreatment solution of the present invention can be reused for 8-10 times (provided that the used freezing pretreatment solution is still relatively clean and not dirty). If the solution is reused for 8 times, an amount of auxiliary agent used by the present embodiment will be reduced to below 11% of the amount of antifreeze agent used by Yang et al.
3) Compared with Yang et al, the pretreatment time according to the present embodiment is reduced from 2 hours to 30 mins, which is a reduction by 75%.
4) A water loss rate detected is 1.72% for the white prawns treated according to the freezing pretreatment of the present embodiment, which is 3% lower than the water loss rate of the white prawns detected according to the freezing pretreatment method of Yang et al.

### Embodiment 6-1:

Freezing pretreatment auxiliary agent: A compound of sodium tripolyphosphate, sorbitol and trehalose in a ratio of 2:2:1. Use the compound in an amount of 2.5% of a total weight of surimi (ground meat), add in a little amount of water to dissolve the freezing pretreatment auxiliary agent to obtain a freezing pretreatment solution, mix the freezing pretreatment solution with the surimi to obtain a mixture, stir and blend the mixture.

### Object: Fresh sea eel surimi

Process: After the mixture of the freezing pretreatment solution and the surimi is stirred and blended, place the mixture in an alternating electromagnetic environment having a magnetic field magnitude of 1000-2000µT and a frequency of 800-1600Hz, rest the mixture for 10 mins and then store the mixture in a freezer for freezing. A comparison between the experiment results according to embodiment 6-1 and parameters measured in several control groups are set out in table 6-1:

**Table 6-1: Influence to the properties of the surimi according to embodiment 6-1 and several control groups after the surimi is frozen for 7 days and 14 days**

| | 7 days | | 14 days | |
|---|---|---|---|---|
| | salt-soluble protein | viscosity of surimi | salt-soluble protein | viscosity of surimi |
| | mg·g-1 ( meat) | g/cm^2 | mg·g-1 ( meat) | g/cm^2 |
| No magnetic field | 35.3 | 9368.2 | 29.0 | 7235.9 |
| No auxiliary agent | | | | |
| Has magnetic field | 35.8 | 9375.3 | 29.4 | 7247.2 |
| No auxiliary agent | | | | |
| Has auxiliary agent | 44.1 | 11418.3 | 38.9 | 10486.7 |
| No magnetic field | | | | |
| Has magnetic field | 45.6 | 12353.5 | 41.3 | 11523.2 |
| Has auxiliary agent | | | | |

### Embodiment 6-2

The present embodiment is a comparative experiment with reference to the freezing pretreatment technique disclosed by Cui et al. In the present embodiment, the choice of ingredients of the freezing pretreatment auxiliary agent and the object to be frozen are the same as those taught by Cui et al.

Freezing pretreatment auxiliary agent: A compound of sodium tripolyphosphate, sorbitol and trehalose in a ratio of 2:2:1. Dissolve the compound in water to obtain a freezing pretreatment solution having a concentration level of 3.75%, wherein an amount of water as used is just sufficient to cover the large yellow croakers (*Larimichthys crocea*) to be subject to freezing pretreatment in a container (i.e. a volume of the freezing pretreatment solution comprises 1.5% sodium tripolyphosphate, 1.5% sorbitol and 0.75 trehalose and the remaining volume being water).

### Object: large yellow croakers (Larimichthys crocea)

Process: after the large yellow croakers are soaked in the freezing pretreatment solution, place the large yellow croakers soaked in the freezing pretreatment solution at rest in an alternating electromagnetic environment having a magnetic field magnitude of 1500-3000µT and a frequency of 1500-3000Hz for pretreatment under temperature 0-10°C. A pretreatment time for each batch of large yellow croakers is 20 mins. After that, use a common plate type quick freezing machine to quickly freeze the large yellow croakers to have a center temperature below -18°C. Next, the large yellow croakers are frozen in a -18°C freezer for 3 months directly according to ordinary freezing procedure without first being vacuum packaged.

The corresponding freezing pretreatment according to Cui et al. comprises: the large yellow croakers are soaked in a solution of 2% polyphosphates, 2% sorbitol and 1% trehalose for 30 mins before being frozen.

Comparisons between the effects achieved by the present embodiment and the freezing pretreatment method of Cui et al after the large yellow croakers are frozen and stored at -18°C for 3 months:
By using large yellow croakers each having a weight of around 300g and after storing them for 3 months frozen at -18°C in a vacuum packaging, comparisons concerning evaluation criteria which include condition of fish eyes, color of the gills, brightness of fish body, mucus on the fish skin, resilience of fish body, pH value, amount of salt-soluble protein, Ca²⁺⁻ATPase activity and taste after steaming are set out as follows:

**Table 6-2-1 A table comparing the changes of various parameters of the large yellow croakers according to two different freezing pretreatment methods after the large yellow croakers are frozen for 3 months**

| | pH Value | salt-soluble protein (ug) | Ca²⁺⁻ATPase activity (U/g) |
|---|---|---|---|
| Control sample being fresh yellow croakers | 7.05 | 65 | 34 |
| Freezing pretreatment according to Cui et al | 6.85 | 28 | 20 |
| Freezing pretreatment according to the present embodiment | 6.92 | 36 | 28 |

**Table 6-2-2 A table comparing the changes of various parameters concerning taste and appearance of the large yellow croakers according to two different freezing pretreatment methods after the large yellow croakers are frozen for 3 months**

| | Clear and fresh fish eyes | Bright red gills | Fish body bright and lustrous | Mucus on fish skin clear and abundant | Resilient fish body upon pressing | Crisp and savory taste after steaming |
|---|---|---|---|---|---|---|
| Control sample being fresh yellow croakers | (score) 10 | (score) 10 | (score) 10 | (score) 10 | (score) 10 | (score) 10 |
| Freezing pretreatment according to Cui et al | 8 | 8 | 8 | 8 | 8 | 8 |
| Freezing pretreatment according to the present embodiment | 9 | 8 | 9 | 9 | 9 | 9 |

### Comparative experiment results:

1) The freezing pretreatment auxiliary agent used in the freezing pretreatment method according to the present embodiment has a concentration level of 3.75%, which is reduced from 5% of the water retaining agent which is a compound solution used in the freezing pretreatment of Cui et al, meaning that the amount used by the present embodiment is just 74% of the amount used by Cui et al for a single time use.
2) Compared with Cui et al. in which the water retaining agent can be used for one time only, the freezing pretreatment solution of the present invention can be reused for 8-10 times (provided that the used freezing pretreatment solution is still relatively clean and not dirty). If the solution is reused for 8 times, an amount of auxiliary agent used by the present embodiment will be reduced to below 10% of the amount of antifreeze agent used by Cui et al.
3) Compared with Cui et al, the pretreatment time according to the present embodiment is reduced from 30 mins to 20 mins, which is a reduction by above 67%.
4) The frozen product according to the present embodiment is better than the frozen product subject to antifreeze agent and vacuum packaging even when vacuum packaging is not used by the present embodiment.

As shown above, the present embodiment has made significant technical improvement since the quality of frozen product is obviously improved even with noticeable reduction of the amount of pretreatment auxiliary agent used and pretreatment time required.

Embodiments 7-1 to embodiments 7-3 described below is the use of the most preferred formula of the freezing pretreatment auxiliary agent according to the present invention on fruits and vegetables.

### Embodiment 7-1:

Freezing pretreatment auxiliary agent: A compound of sorbitol, trehalose and amino acid. Among 100% volume of a freezing pretreatment solution as prepared, 6% is sorbitol, 0.8% is trehalose, 0.02% is amino acid and the remaining volume is water.

### Object: Green bamboo shoots (Leleba oldhami)

Process: After the green bamboo shoots are placed in the freezing pretreatment solution, place the green bamboo shoots in an alternating electromagnetic environment having a magnetic field magnitude of 60-1500µT and a frequency of 20-500Hz, rest for 25-40 mins and then quick freezing the green bamboo shoots and then store them in a frozen condition for 3 months.

After 3 months, defrost the green bamboo shoots and then grade the defrost green bamboo shoots with respect to their taste, aroma, color, and texture, and then calculate the scores.

**Table 7 indications of the scores for taste, aroma, color and texture for defrost fruits and vegetables (maximum accumulated score is 20)**

| Score | Taste | Aroma | Color | Texture |
|---|---|---|---|---|
| 5 | Very good (as good as before freezing) | Same as before freezing | Same as before freezing | Same as before freezing |
| 4 | Good (nearly as good as before freezing) | Nearly the same as before freezing | Nearly the same as before freezing | Nearly the same as before freezing |
| 3 | Good | Slightly weaker | Slight color change | Slightly softer |
| 2 | OK | Weaker | Color change | Softer |
| 1 | Bad (lowest product value for marketed product) | Obvious changes in aroma | Show abnormal color | Cracked skin |

**Table 7-1 Scoring table with respect to taste, aroma, color and texture of defrost green bamboo shoots treated according to the embodiment 7-1 and various control groups.**

| Criteria | Accumulated score | Score for taste | Score for aroma | Score for color | Score for texture |
|---|---|---|---|---|---|
| Has electromagnetic field | 17 | 4 | 4 | 5 | 4 |
| Has auxiliary agent | | | | | |
| Has auxiliary agent | 13 | 3 | 3 | 4 | 3 |
| No electromagnetic field | | | | | |
| Has electromagnetic field | 12 | 3 | 3 | 3 | 3 |
| No auxiliary agent | | | | | |
| No electromagnetic field | 11 | 3 | 3 | 3 | 2 |
| No auxiliary agent | | | | | |

### Embodiment 7-2:

Freezing pretreatment auxiliary agent: A compound of sorbitol, trehalose and amino acid. Among 100% volume of a freezing pretreatment solution as prepared, 1% is sorbitol, 4% is trehalose, 0.3% is amino acid and the remaining volume is water.

### Object: Mangosteens (Garcinia mangostana)

Process: After the mangosteens are placed in the freezing pretreatment solution, place the mangosteens in an alternating electromagnetic environment having a magnetic field magnitude of 60-1500µT and a frequency of 20-500Hz, rest for 40-60 mins and then quick freezing the mangosteens and then store them in a frozen condition for 3 months.

After 3 months, defrost the mangosteens and then grade the defrost mangosteens with respect to their taste, aroma, color, and texture, and then calculate the scores.

**Table 7-2 Scoring table with respect to taste, aroma, color and texture of defrost mangosteens treated according to the embodiment 7-2 and various control groups.**

| Criteria | Accumulated score | Score for taste | Score for aroma | Score for color | Score for texture |
|---|---|---|---|---|---|
| Has electromagnetic field | 17 | 4 | 4 | 5 | 4 |
| Has auxiliary agent | | | | | |
| Has auxiliary agent | 14 | 4 | 3 | 4 | 3 |
| No electromagnetic field | | | | | |
| Has electromagnetic field | 12 | 3 | 3 | 3 | 3 |
| No auxiliary agent | | | | | |
| No electromagnetic field | 10 | 2 | 3 | 3 | 2 |
| No auxiliary agent | | | | | |

### Embodiment 7-3

Freezing pretreatment auxiliary agent: A compound of sorbitol, trehalose and amino acid. Among 100% volume of a freezing pretreatment solution as prepared, 1.5% is sorbitol, 1.5% is trehalose, 0.5% is amino acid and the remaining volume is water.

### Object: Lychees

Process: After the lychees are placed in the freezing pretreatment solution, place the lychees in an alternating electromagnetic environment having a magnetic field magnitude of 60-1500µT and a frequency of 20-500Hz, rest for 20-40 mins and then quick freezing the lychees and then store them in a frozen condition for 3 months.

After 3 months, defrost the lychees and then grade the defrost lychees with respect to their taste, aroma, color, and texture, and then calculate the scores.

**Table 7-3 Scoring table with respect to taste, aroma, color and texture of defrost lychees treated according to the embodiment 7-3 and various control groups.**

| Criteria | Accumulated score | Score for taste | Score for aroma | Score for color | Score for texture |
|---|---|---|---|---|---|
| Has electromagnetic field | 19 | 5 | 5 | 4 | 5 |
| Has auxiliary agent | | | | | |
| Has auxiliary agent | 14 | 3 | 4 | 3 | 4 |
| No electromagnetic field | | | | | |
| Has electromagnetic field | 11 | 3 | 3 | 2 | 3 |
| No auxiliary agent | | | | | |
| No electromagnetic field | 11 | 3 | 3 | 2 | 3 |
| No auxiliary agent | | | | | |

### 4. Conclusion

By comparing the experimental data of the various embodiments described above, the effects on frozen products are not obvious if only auxiliary agent is used without using a magnetic field, or if only a magnetic field is used without using an auxiliary agent. If being treated according to the alternating electromagnetic environment disclosed by the present invention, with the concentration level of the auxiliary agent added remains unchanged, the amount of salt-soluble protein and also the viscosity of the surimi increase. Shells or skins of fruits and vegetables have very limited resilience, therefore fruits and vegetables will easily have cracked skin, changed color, and destroyed tissues after being frozen (and will become spongy, rotten and wetted with juice when being defrost), thereby greatly affecting the taste, aroma, color and texture of most of these fruits and vegetables after being frozen. By using the alternating electromagnetic environment together with the modified freezing pretreatment auxiliary agent according to the present invention, the taste, aroma, color and texture of frozen fruits and vegetables are very close to the fruits and vegetables before being frozen.

If only the freezing pretreatment auxiliary agent that achieves the best effects is used during pretreatment, without using an electromagnetic field, the quality of frozen fruits and vegetables will still show noticeable improvements, but their quality is still quite far from being the same as the products treated additionally and together with an electromagnetic field.

The above data also shows that a low yield alternating electromagnetic field will not easily generate resonance in an aqueous solution. The freezing pretreatment auxiliary agent of a certain concentration level existing in the solution facilitates the resonance of the low yield alternating electromagnetic field of the present invention. The use of an electromagnetic field having a low magnitude of the field can on one hand satisfy the requirements for product quality, and on the other hand being more energy conservative and environmental friendly, and also being protective to the health of the workers.

By contrast, the two Japanese patent publications discussed in the beginning require thorough modifications of the existing freezing devices, electromagnetic radiation throughout the entire process of freezing, and a large amount of capital. The technical solution provided by the present invention adapts well to the existing freezing devices without changing the original configurations of the existing freezing devices by only disposing and configuring additional freezing pretreatment devices and procedures to achieve significant improvements in the quality of frozen products, thereby achieving quality storage and freshness preservation of frozen products.

As shown above, the food freezing pretreatment method provided by the present invention, as compared with the prior art pretreatment method of simply adding in food antifreeze agent, shortens the pretreatment time, reduces the use of antifreeze agent and thus reduces the antifreeze agent left in the food so that food items are safer to consume. The present invention creates finer ice crystals in the food items during freezing which reduce the potential damages to the food items by the ice crystals, and the food items after being defrost have improved quality in different aspects concerning their freshness.

The present invention is illustrated and described by using several embodiments and their alternatives. However, it should be noted that various changes and modifications are possible without deviating from the spirit of the present invention. Therefore, the present invention should not be limited except by the appended claims or their equivalence.

## Claims

1. A freezing pretreatment method for animals and plants, **characterized in** comprising the following steps:
step 1: preparing a freezing pretreatment solution, which comprises a freezing pretreatment auxiliary agent and water, wherein the freezing pretreatment auxiliary agent comprises 0.01-10 mass percentage of the freezing pretreatment solution and the water comprises a remaining mass percentage of the freezing pretreatment solution;
step 2: pretreating within a magnetic field, which comprises removing impurities and cleaning food items to be frozen and kept fresh, soaking the food items in the freezing pretreatment solution of 0-10°C as prepared, placing the food items soaked in the freezing pretreatment solution in a low yield alternating electromagnetic environment for 5-60mins;
said low yield alternating electromagnetic environment has a field magnitude of 10-5000µT and a frequency of 15-30000Hz.

2. The freezing pretreatment method of claim 1, wherein the field magnitude of said low yield alternating electromagnetic environment is 20-2000µT.

3. The freezing pretreatment method of claim 1, wherein the frequency of said low yield alternating electromagnetic environment is 20-1600Hz.

4. The freezing pretreatment method of claim 1, wherein the freezing pretreatment auxiliary agent comprises any one of 0.01-5 mass percentage of phosphates, 0.01-10 mass percentage of sugar alcohols, 0.01-10 mass percentage of sugars, and 0.01-5 mass percentage of amino acids or any combination thereof.

5. A freezing pretreatment method for fruits and vegetables, **characterized in** comprising the following steps:
step 1: preparing a freezing pretreatment solution, which comprises a freezing pretreatment auxiliary agent and water, wherein the freezing pretreatment auxiliary agent comprises 0.01-10 mass percentage of the freezing pretreatment solution and the water comprises a remaining mass percentage of the freezing pretreatment solution;
step 2: pretreating within a magnetic field, which comprises removing impurities and cleaning food items to be frozen and kept fresh, soaking the food items in the freezing pretreatment solution of 0-10°C as prepared, placing the food items soaked in the freezing pretreatment solution in a low yield alternating electromagnetic environment for 5-60mins;
said low yield alternating electromagnetic environment has a field magnitude of 10-5000µT and a frequency of 15-30000Hz;
the freezing pretreatment auxiliary agent comprises 0.02- 6 mass percentage of sorbitol, 0.02- 4 mass percentage of trehalose and 0.02- 4% of amino acids.

6. The freezing pretreatment method for fruits and vegetables of claim 5, wherein the field magnitude of said low yield alternating electromagnetic environment is 20-2000µT.

7. The freezing pretreatment method for fruits and vegetables of claim 5, wherein the frequency of said low yield alternating electromagnetic environment is 20-1600Hz.
